# EUROPÄISCHE PATENTSCHRIFT

(11) **EP 3 412 133 B1**
(45) Veröffentlichungstag und Bekanntmachung des Hinweises auf die Patenterteilung: **14.09.2022**
(21) Anmeldenummer: 17400033.1
(22) Anmeldetag: 09.06.2017
(51) Int. Cl.: A01D 34/00

(54) **BODENBEARBEITUNGSSYSTEM MIT MINDESTENS EINER LADESTATION**
FLOOR PROCESSING SYSTEM WITH AT LEAST ONE CHARGING STATION
SYSTÈME DE TRAVAIL DU SOL COMPRENANT AU MOINS UNE STATION DE CHARGE

(43) Veröffentlichungstag der Anmeldung: 12.12.2018
(73) Patentinhaber: Andreas Stihl AG & Co. KG, 71336 Waiblingen (DE)
(72) Erfinder: Matt, Sebastian, 6330 Kufstein (AT); Zöttl, Samuel, 6092 Birgitz (AT)
(74) Vertreter: Wasmuth, Rolf

(56) Entgegenhaltungen:
- EP-A1- 2 658 073
- EP-A1- 3 069 593
- WO-A1-2016/102143
- DE-U1-202013 101 894

## Beschreibung

Die Erfindung betrifft ein Bodenbearbeitungssystem aus mindestens einem selbstfahrenden Bodenbearbeitungsgerät, wobei der Arbeitsbereich des Bodenbearbeitungsgerätes durch eine Randbegrenzung bestimmt ist, die durch einen Begrenzungsdraht gebildet ist. Das Bodenbearbeitungsgerät fährt innerhalb des Arbeitsbereichs selbstständig einen Fahrweg ab, wozu das Bodenbearbeitungsgerät einen Antrieb, eine Steuereinheit und einen bordeigenen Akku zur Energieversorgung des Bodenbearbeitungsgerätes aufweist. Das Bodenbearbeitungssystem umfasst ferner eine Ladestation zum Aufladen des Akkus des Bodenbearbeitungsgerätes. Aus der WO 2016/102143 A1, der EP 2 658 073 A1 oder der EP 3 069 593 A1 ist bekannt, ein selbstfahrendes Bodenbearbeitungsgerät in einem Arbeitsbereich zu betreiben, der durch einen Begrenzungsdraht begrenzt ist. Das Bodenbearbeitungsgerät fährt innerhalb des Arbeitsbereiches selbstständig einen zufälligen, vorgegebenen oder selbstständig geplanten Fahrweg ab. Eine Basisstation des Systems ist elektrisch an den Begrenzungsdraht angeschlossen und sendet ein Drahtsignal auf den Begrenzungsdraht, dessen elektromagnetisches Feld in einer Empfangsspule des Bodenbearbeitungsgerätes ein Empfangssignal induziert. Das Empfangssignal wird zur Steuerung des Bodenbearbeitungsgerätes in einer Steuereinheit verarbeitet und das Bodenbearbeitungsgerät entsprechend gesteuert. Zum Aufladen des Akkus ist die Basisstation zugleich als Ladestation ausgebildet.

Bei Bodenbearbeitungssystemen aus mehreren selbstfahrenden Bodenbearbeitungsgeräten, z.B. aus mehreren, gemeinsam eine Arbeitsfläche bearbeitenden Rasenmähern kann es bereits zu Arbeitspausen des Systems kommen, wenn das erste Bodenbearbeitungsgerät in der als Ladestation ausgebildeten Basisstation geladen wird und das zweite Bodenbearbeitungsgerät aufgrund einer gesunkenen Akkuladung ebenfalls die als Ladestation ausgebildete Basisstation anfährt. Aufgrund des noch andauernden Ladevorgangs in der besetzten Basisstation muss das zweite Bodenbearbeitungsgerät vor der Basisstation warten. Die Arbeit ist unterbrochen. Werden mehr als zwei Bodenbearbeitungsgeräte innerhalb eines Bodenbearbeitungssystems eingesetzt, kann es bei nur einer Ladestation im System zu erheblichen Arbeitspausen kommen, wenn mehrere Bodenbearbeitungsgeräte gleichzeitig zu laden sind. In der DE 20 2013 101 894 U1 wird hierzu vorgeschlagen, mehrere Ladestationen vorzusehen, die über schaltbare Weichen vom Begrenzungsdraht aus angefahren werden können. Der Begrenzungsdraht muss dazu mit mehreren Weichen für die mehreren Ladestationen ausgebildet sein.

Der Erfindung liegt die Aufgabe zugrunde, ein Bodenbearbeitungssystem aus mindestens einem selbstfahrenden Bodenbearbeitungsgerät derart weiterzubilden, dass einerseits Wartezeiten und/oder lange Fahrwege für das Aufladen des Akkus eines Bodenbearbeitungsgerätes vermieden und andererseits beim Aufstellen und Positionieren einer Ladestation keine Anpassungsarbeiten am Begrenzungsdraht notwendig sind.

Die Aufgabe wird erfindungsgemäß nach den Merkmalen des Anspruchs 1 gelöst.

Es ist eine Ladestation vorgesehen, die ohne Unterbrechung des Begrenzungsdrahtes der Randbegrenzung einfach auf die Randbegrenzung aufgestellt wird und auf dem Begrenzungsdraht positioniert wird. Dabei wird der Begrenzungsdraht nicht verändert, aufgetrennt oder angepasst. Es sind keine Anpassungsarbeiten beim Aufstellen und Positionieren der Ladestation auf der Randbegrenzung auszuführen. Der Begrenzungsdraht ist im Bereich der Ladestation unterbrechungsfrei weitergeführt. Der Randbegrenzung selbst wird nicht verändert oder sonst wie angepasst.

Auch beim Einsatz nur eines Bodenbearbeitungsgerätes speziell auf großen komplexen Flächen kann es sinnvoll sein, mehrere Ladestationen im Arbeitsbereich einzusetzen, um unnötige Fahrten und Fahrzeiten zu minimieren.

Zweckmäßig fährt das Bodenbearbeitungsgerät die Ladestation entlang der Randbegrenzung an. Stellt der Benutzer eine Ladestation auf die Randbegrenzung auf, wird ein auf der Randbegrenzung fahrendes Bodenbearbeitungsgerät die Ladestation sicher finden, ohne dass Änderungen am Bodenbearbeitungssystem vorgenommen werden müssen.

Eine Ladestation weist vorteilhaft einen Stationssender auf, der in Abhängigkeit von einem an die Ladestation angedockten Bodenbearbeitungsgerät ein Zustandssignal sendet. Ein die Ladestation anfahrendes Bodenbearbeitungsgerät kann so anhand eines empfangenen Zustandssignals erkennen, ob die Ladestation zur Einfahrt frei ist.

Das Zustandssignal wird im Bodenbearbeitungsgerät durch einen Empfänger empfangen, und im Bodenbearbeitungsgerät verarbeitet. Ein Zustandssignal, welches z. B. die Anwesenheit eines Bodenbearbeitungsgerätes in der Ladestation anzeigt, wird in der Steuereinheit des Bodenbearbeitungsgerätes derart verarbeitet, dass z. B. eine besetzte Ladestation umfahren wird. Das gesendete "Zustandssignal" kann auch einen Defekt oder einen Ausfall der Ladestation anzeigen. Auch kann das "Zustandssignal" eine "Freianzeige" wiedergeben, welche die Ladebereitschaft der Ladestation anzeigt.

Vorteilhaft sind im Arbeitsbereich mehrere autonom arbeitende Bodenbearbeitungsgeräte vorgesehen, so dass auch große und/oder verwinkelte und kompliziert abzufahrende Flächen in einer vorgebbaren Zeitdauer verlässlich abzuarbeiten sind.

Ist in einem Bodenbearbeitungssystem mit mehreren Bodenbearbeitungsgeräten und mehreren Ladestationen eine Ladestation durch ein angedocktes Bodenbearbeitungsgerät besetzt, wird der Stationssender der Ladestation z. B. ein Zustandssignal "Besetzt" aussenden. Ein auf dem Fahrweg zu dieser besetzten Ladestation auf der Randbegrenzung fahrendes Bodenbearbeitungsgerät wird sich der besetzten Ladestation nähern und im Sendebereich des Stationssenders das Zustandssignal empfangen. Das Zustandssignal wird in dem sich nähernden Bodenbearbeitungsgerät verarbeitet und - als Reaktion auf das empfangene Zustandssignal - ein Fahrweg angesteuert, auf dem das Bodenbearbeitungsgerät die Randbegrenzung zunächst in Richtung in den Arbeitsbereich verlässt, längs eines insbesondere programmierten Fahrweges die besetzte Ladestation umfährt, um dann wieder auf die Randbegrenzung zurückzufahren. Das Bodenbearbeitungsgerät folgt nun weiter der Randbegrenzung bis zu einer nächsten - freien - Ladestation.

Das Bodenbearbeitungsgerät kann vorteilhaft über eine interne Karte verfügen, über die es die Lage der Ladestationen kennt. Der Fahrweg des Bodenbearbeitungsgerätes zur Ladestation muss daher nicht zwingend längs der Randbegrenzung erfolgen; es ist auch - z. B. unter Verwendung der internen Karte - ein direktes Anfahren der Ladestation durch das Bodenbearbeitungsgerät zweckmäßig. Vorteilhaft empfängt das Bodenbearbeitungsgerät das Zustandssignal der Stationssender aller Ladestationen insbesondere im gesamten Arbeitsbereich und kann unmittelbar eine freie Ladestation anfahren.

An den Begrenzungsdraht ist elektrisch eine Basisstation angeschlossen, welche auf dem Begrenzungsdraht ein Drahtsignal sendet.

In vorteilhafter Weiterbildung der Erfindung sind die Basisstation des Bodenbearbeitungssystems und die Ladestation des Bodenbearbeitungssystems baugleich ausgebildet. Während die Basisstation an die Enden der Drahtschleife des Begrenzungsdrahtes angeschlossen ist, wird der Begrenzungsdraht durch eine weitere Ladestation unterbrechungsfrei durchgeschleift. Die Ladestation wird lediglich auf den Begrenzungsdraht aufgestellt, ohne dass elektrische Anschlussarbeiten auszuführen sind. Die Ladestation kann durch einen Benutzer an einer beliebigen Stelle des Begrenzungsdrahtes positioniert werden, jederzeit entfernt oder einfach umgesetzt werden. Der Benutzer muss weder am Bodenbearbeitungssystem selbst noch an der Ladestation Anpassungsmaßnahmen oder besondere Einstellungen vornehmen. Die Ladestation muss lediglich auf dem Begrenzungsdraht positioniert werden. Es kann vorteilhaft sein, die Ladestation - mit einem Stecker - an ein elektrisches Spannungsnetz anzuschließen.

Das auf dem Begrenzungsdraht gesendete Drahtsignal induziert in einer Empfangsspule des Bodenbearbeitungsgerätes ein Empfangssignal, wobei das Empfangssignal in der Steuereinheit verarbeitet und zur Steuerung des Bodenbearbeitungsgerätes verwendet wird.

In vorteilhafter Weiterbildung der Erfindung ist zumindest eine der Empfangsspulen als Empfänger für das Zustandssignal ausgebildet. Der Bauteilaufwand kann so gesenkt werden.

Vorteilhaft wird zur Übertragung eines Ladestroms die Ladestation mit einer Kontaktnase versehen, die zur elektrischen Verbindung mit einer Kontaktbuchse des Bodenbearbeitungsgerätes vorgesehen ist. Mit dem Einfahren des Bodenbearbeitungsgerätes in die Ladestation wird zugleich eine elektrische Verbindung zur Übertragung des Ladestroms hergestellt.

In einer vorteilhaften Ausführungsform der Erfindung kann der Akku eines Bodenbearbeitungsgerätes in der Ladestation kontaktlos geladen werden. Hierzu weisen die Ladestation eine entsprechende leistungsstarke Feldspule und das Bodenbearbeitungsgerät eine Ladespule auf.

Vorteilhaft weist der Stationssender der Ladestation eine Funkabstrahlcharakteristik auf, die auf den durch den Begrenzungsdraht begrenzten Arbeitsbereich gerichtet ist. Dadurch kann sichergestellt werden, dass außerhalb des Begrenzungsdrahtes die Funkbelastung gering ist. Störungen anderer Betriebsanordnungen werden vermieden.

Zweckmäßig ist der Stationssender ein Nahsender und baut eine Funkverbindung zum Bodenbearbeitungsgerät auf. Eine derartige Funkverbindung kann vorteilhaft eine Infrarotverbindung, eine Bluetooth-Funkverbindung, eine NFC-Funkverbindung oder dgl. Funkverbindung sein. Diese Funkverbindungen haben einen nur geringen Ausbreitungsbereich und können so andere in der Nähe betriebene autonome Bodenbearbeitungsgeräte nicht stören.

Insbesondere ist das Bodenbearbeitungsgerät ein selbstfahrender Rasenmäher.

Weitere vorteilhafte Ausführungsbeispiele der Erfindung ergeben sich durch beliebige Kombination der angegebenen Merkmale und der beschriebenen Ausführungsbeispiele.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung ein Bodenbearbeitungssystem aus mehreren in einem Arbeitsbereich selbstfahrenden Bodenbearbeitungsgeräten,
- Fig. 2: in schematischer Darstellung den Aufbau eines Bodenbearbeitungsgerätes am Beispiel eines selbstfahrenden Rasenmähers,
- Fig. 3: in schematischer Darstellung eine Ladestation.

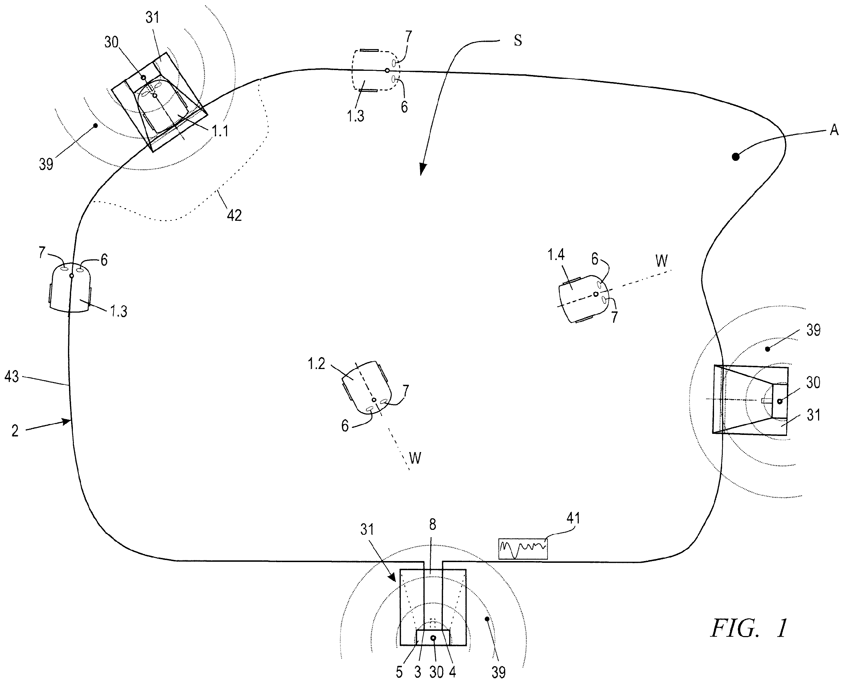

Das in Fig. 1 dargestellte Bodenbearbeitungssystem S umfasst zumindest ein selbstfahrendes Bodenbearbeitungsgerät 1.1, 1.2, 1.3 und 1.4 zur Bearbeitung eines vorgegebenen Arbeitsbereiches A. Im Ausführungsbeispiel sind mehrere, insbesondere vier Bodenbearbeitungsgeräte 1.1, 1.2, 1.3 und 1.4 zur gemeinsamen Bearbeitung des vorgegebenen Arbeitsbereiches A gezeigt. Das Bodenbearbeitungssystem S kann weniger oder auch mehr Bodenbearbeitungsgeräte umfassen. Jedes einzelne Bodenbearbeitungsgerät 1.1, 1.2, 1.3 und 1.4 arbeitet autonom und fährt innerhalb des Arbeitsbereiches A selbstständig einen zufälligen, vorgegebenen oder selbstständig geplanten Fahrweg W ab.

Im gezeigten Ausführungsbeispiel nach Fig. 1 ist der Arbeitsbereich A des Bodenbearbeitungssystems S durch eine Randbegrenzung 2 begrenzt. Die Randbegrenzung 2 kann vielfältig ausgebildet sein. Die Randbegrenzung 2 kann vorteilhaft durch Kartenkoordinaten, durch Funkbaken, durch GPS Satelliten oder dgl. bestimmt sein. Im gezeigten Ausführungsbeispiel ist die Randbegrenzung 2 durch einen Begrenzungsdraht 43 gebildet, der den Arbeitsbereich A umgibt. Der beispielhaft gezeigte Begrenzungsdraht 43 ist insbesondere als geschlossene Drahtschleife verlegt, wobei die Enden 3, 4 des Begrenzungsdrahtes 43 an eine Sendeeinheit 5 angeschlossen sind. Die Sendeeinheit 5 sendet - bevorzugt in zeitlich festen Abständen - ein elektrisches Drahtsignal 41 auf den Begrenzungsdraht 43, dessen elektromagnetisches Feld in Empfangsspulen 6 und 7 eines jeden einzelnen im Arbeitsbereich A fahrenden Bodenbearbeitungsgerätes 1.1 bis 1.4 ein Empfangssignal induziert.

Die Sendeeinheit 5 ist Teil einer Basisstation 8, die das Drahtsignal 41 zur Richtungssteuerung der Bodenbearbeitungsgeräte 1.1, 1.2, 1.3 und 1.4 sendet. In Fig. 1 ist die Basisstation 8 vorteilhaft zugleich als Ladestation 31 ausgebildet.

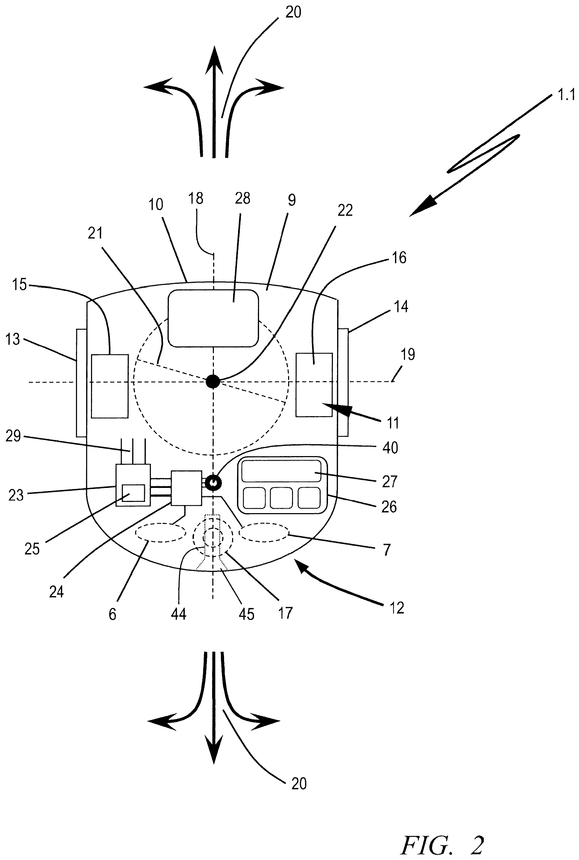

In Fig. 2 ist in Draufsicht schematisch ein Bodenbearbeitungsgerät 1.1 gezeigt, welches als Rasenmäher 10 ausgebildet ist. Die Darstellung des autonom arbeitenden, selbstfahrenden Rasenmähers 10 ist beispielhaft. Das Bodenbearbeitungsgerät 1.1 kann auch als Vertikutierer, Kehrmaschine, Staubsauger, autonom fahrender Aufsitzmäher oder dgl. Bodenbearbeitungsgerät ausgebildet sein.

Das in Fig. 2 als Rasenmäher 10 dargestellte Bodenbearbeitungsgerät 1.1 besteht im Wesentlichen aus einem Fahrwerk mit hinteren Antriebsrädern 13, 14 mit einem Antrieb 11. Im gezeigten Ausführungsbeispiel ist jedem Antriebsrad 13, 14 ein elektrischer Antriebsmotor 15, 16 zugeordnet, so dass die Antriebsräder 13 und 14 zur Richtungssteuerung des Rasenmähers 10 mit unterschiedlicher Drehzahl und/oder in unterschiedlicher Drehrichtung angetrieben werden können. Der Antrieb 11 besteht somit aus zwei voneinander unabhängig ansteuerbaren Elektromotoren.

Im vorderen Bereich 12 des Gehäuses 9 des Rasenmähers 10 ist ein insbesondere selbstlenkendes drittes Rad 17 vorgesehen. Das dritte Rad 17 liegt vorzugsweise auf einer Längsmittelachse 18 des Gehäuses 9. Die Ausbildung eines Fahrgestells mit vier Rädern kann zweckmäßig sein.

Die Antriebsräder 13, 14 des gezeigten Bodenbearbeitungsgerätes 1.1 drehen um eine gemeinsame Antriebsachse 19. Die Antriebsachse 19 liegt - in Draufsicht auf den Rasenmäher 10 nach Fig. 2 - insbesondere rechtwinklig zur Längsmittelachse 18 des Gehäuses 9. Für eine Geradeausfahrt sind die Antriebsräder 13 und 14 über ihre elektrischen Antriebsmotoren 15 und 16 synchron anzutreiben. Für eine Kurvenfahrt werden die Antriebsräder 13, 14 durch ihre Antriebsmotoren 15, 16 z. B. mit unterschiedlichen Drehzahlen angetrieben. Durch den Antrieb 11 ist das Bodenbearbeitungsgerät 1.1 in jeder gewünschten Fahrtrichtung 20 gemäß den dargestellten Pfeilen vorwärts oder rückwärts zu bewegen.

Im Ausführungsbeispiel nach Fig. 2 weist das Bodenbearbeitungsgerät 1.1 zwischen den Antriebsrädern 13 und 14 ein Arbeitswerkzeug 21 auf. Im Ausführungsbeispiel als Rasenmäher 10 ist das Arbeitswerkzeug 21 ein um eine senkrechte Drehachse 22 rotierendes Schneidmesser.

Die Steuerung der elektrischen Antriebsmotoren 15 und 16 erfolgt über eine Steuereinheit 23, die über schematisch angedeutete elektrische Leitungen 29 mit den elektrischen Antriebsmotoren 15 und 16 verbunden ist.

Das auf der Drahtschleife des Begrenzungsdrahtes 43 gesendete Drahtsignal 41 wird in den Empfangsspulen 6 und 7 des Bodenbearbeitungsgerätes 1.1 empfangen. Die Empfangsspulen 6 und 7 liegen im vorderen Bereich 12 des Gehäuses 9 jeweils auf einer Seite der Längsmittelachse 18 des Bodenbearbeitungsgerätes 1.1. Die in den Empfangsspulen 6 und 7 induzierten Empfangssignale werden einer gemeinsamen Auswerteeinheit 24 zugeführt, die mit der Steuereinheit 23 verbunden ist. Vorteilhaft umfasst die Steuereinheit 23 einen Speicher 25 für eine Betriebsvariable, die zum Betrieb des Bodenbearbeitungsgerätes 1.1 zweckmäßig ist. Eine derartige Betriebsvariable kann z. B. die Startzeit des Betriebs sein, die Dauer des Betriebs, die Schnitthöhe (bei einer Ausbildung als Rasenmäher), der Fahrweg zu einer Ladestation, ein Mähplan als Wochenplan oder dgl. Betriebsvariable.

In Fig. 2 ist zur Eingabe von Informationen zur Betriebsvariablen durch den Benutzer ein Eingabefeld 26 vorgesehen, welches vorteilhaft einen Bildschirm 27 und Eingabetasten aufweist. Es kann zweckmäßig sein, den Bildschirm als Touchscreen auszubilden, so dass Eingabetasten entfallen können.

Jedes Bodenbearbeitungsgerät 1.1, 1.2, 1.3, 1.4 kann ferner einen weiteren Empfänger 40 aufweisen, der Funksignale oder Infrarotsignale eines Stationssenders 30 empfängt, der an einer Ladestation 31 vorgesehen ist. Der Stationssender 30 sendet Signale an den Empfänger 40 des Bodenbearbeitungsgerätes 1.1. Diese drahtlose Kommunikationsverbindung zwischen dem Stationssender 30 und dem Empfänger 40 ist vorteilhaft als Funkstrecke oder dgl. ausgebildet. Mögliche Funkstrecken können WLAN-Verbindungen, Bluetooth-Verbindungen, GSM-Verbindungen, NFC-Verbindungen oder dgl. drahtlose Verbindungen, insbesondere Nahfeldverbindungen sein. Eine Infrarotverbindung ist vorteilhaft.

Die elektrische Versorgung der Steuereinheit 23 und aller ihrer Komponenten, die elektrische Versorgung des elektrischen Antriebs 11 sowie die elektrische Versorgung des Empfängers 40 wird durch einen bordeigenen Akku 28 gewährleistet. Der Akku 28 ist bevorzugt in das Gehäuse 9 des Bodenbearbeitungsgerätes 1.1 eingeschoben.

Im Betrieb des Bodenbearbeitungssystems S werden die Bodenbearbeitungsgeräte 1.1, 1.2, 1.3 und 1.4 voneinander unabhängig in dem zu bearbeitenden Arbeitsbereich A durch entsprechende Ansteuerung der Antriebsmotoren 15 und 16 verfahren. Jedes einzelne Bodenbearbeitungsgerät 1.1, 1.2, 1.3 und 1.4 arbeitet autonom entsprechend der Information einer Betriebsvariablen in seinem Speicher 25.

Im Betrieb der Bodenbearbeitungsgeräte 1.1, 1.2, 1.3 und 1.4 nimmt die Akkuladung aufgrund der betriebenen elektrischen Verbraucher ab. Die Entladung der Akkus 28 der verschiedenen Bodenbearbeitungsgeräte 1.1, 1.2, 1.3 und 1.4 kann unterschiedlich sein, je nachdem welche Arbeitsleistung das Arbeitswerkzeug 21 sowie der Antrieb 1 verbrauchen. Muss ein Akku 28 eines Bodenbearbeitungsgerätes 1.1, 1.2, 1.3, 1.4 aufgeladen werden, so fährt die Steuereinheit 23 das entsprechende Bodenbearbeitungsgerät 1.1, 1.2, 1.3, 1.4 auf die Randbegrenzung 2, im Ausführungsbeispiel auf den Begrenzungsdraht 43, wie in Fig. 1 am Beispiel des Bodenbearbeitungsgerätes 1.3 gezeigt ist. Die Empfangsspulen 6 und 7 des Bodenbearbeitungsgerätes 1.3 liegen im Ausführungsbeispiel somit jeweils auf einer Seite der Randbegrenzung 2 bzw. des Begrenzungsdrahtes 2, wodurch in einfacher Weise eine Fahrt längs der Randbegrenzung 2 bzw. des Begrenzungsdrahtes 43 gewährleistet ist.

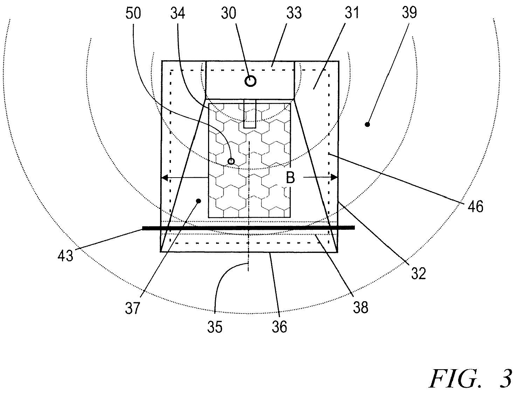

Das Bodenbearbeitungssystem S weist insbesondere mehrere Ladestationen 31 auf. In Fig. 3 ist eine Ladestation 31 vergrößert dargestellt. Eine Ladestation 31 besteht beispielhaft im Wesentlichen aus einer Grundplatte 32, die an einem Ende einen Gehäusekopf 33 mit einer Kontaktnase 34 aufweist. Die Kontaktnase 34 ist bevorzugt zu einer Längsmittelachse 35 der Ladestation 31 ausgerichtet. Die Grundplatte 32 kann zweckmäßig eine von einer vorderen Kante 36 zur Kontaktnase 34 ansteigende Rampe 37 aufweisen. Quer zur Längsmittelachse 35 kann in der Grundplatte 32 eine Aufnahmerinne 38 ausgebildet sein. Die Aufnahmerinne 38 liegt bevorzugt dem Boden des Arbeitsbereiches A zugewandt. Die Aufnahmerinne 38 erstreckt sich vorzugsweise über die gesamte Breite B der Grundplatte 32.

Im gezeigten Ausführungsbeispiel weist der Gehäusekopf 33 ferner einen Stationssender 30 als Funksender auf. Der Stationssender hat eine Funkabstrahlcharakteristik 39. Die Funkabstrahlcharakteristik 39 ist derart gestaltet, dass die Funkstrahlung auf den durch den Begrenzungsdraht 43 begrenzten Arbeitsbereich A gerichtet ist, wie in Fig. 1 dargestellt.

Alternativ zu einer elektrischen Verbindung zwischen einer Kontaktnase 34 und einer Kontaktbuchse 44 zur Zuführung eines Ladestroms kann vorgesehen sein, den Akku 28 eines Bodenbearbeitungsgerätes 1.1, 1.2, 1.3, 1.4 in der Ladestation 31 kontaktlos zu laden. In Fig. 3 ist schematisch eine Ladespule 50 angedeutet, über die ein Ladestrom von der Ladestation 31 auf eine Empfangsspule im Bodenbearbeitungsgerät übertragen wird.

In Fig. 1 ist oben links ein in eine Ladestation 31 eingefahrenes Bodenbearbeitungsgerät 1.1 dargestellt. In der gezeigten Parkstellung des Bodenbearbeitungsgerätes 1.1 greift die Kontaktnase 34 in eine Kontaktbuchse 44 des Bodenbearbeitungsgerätes 1.1 ein und stellt eine elektrische Verbindung zwischen der Ladestation und dem Bodenbearbeitungsgerät 1.1 her. Über die elektrische Verbindung aus Kontaktnase 34 und Kontaktbuchse 44 wird der Akku 28 des Bodenbearbeitungsgerätes 1.1 mit einem Ladestrom aufgeladen. Die Kontaktbuchse 44 liegt im vorderen Bereich 12 des Gehäuses 9 des Bodenbearbeitungsgerätes 1.1. Vorteilhaft teilt die Längsmittelachse 18 des Gehäuses 9 die Kontaktbuchse 44. Wie Fig. 2 zeigt, ist die Kontaktbuchse 44 mit einem trichterartigen Kontaktmaul 45 (Fig. 3) ausgebildet, welches ein leichtes Einfädeln der Kontaktnase 34 in die Kontaktbuchse 44 beim Einfahren des Bodenbearbeitungsgerätes 1.1 in die Ladestation gewährleistet.

Ist ein Bodenbearbeitungsgerät 1.1 in eine Ladestation 31 eingefahren und steht in der in Fig. 1 oben links gezeigten Parkposition, wird der Akku 28 des Bodenbearbeitungsgerätes 1.1 geladen. Die Ladestation 31 erkennt - zumindest bei fließendem Ladestrom - die Anwesenheit des Bodenbearbeitungsgerätes 1.1 in der Ladestation 31 und sendet ein Zustandssignal über den vorzugsweise als Funksender ausgebildeten Stationssender 30. Dieses Zustandssignal wird wiederholt gesendet, solange das Bodenbearbeitungsgerät 1.1 in der Ladestation 31 geladen wird. Es kann vorteilhaft sein, ein Zustandssignal auch dauerhaft auszusenden.

Das Zustandssignal kann z. B. ausgesendet werden, wenn die Ladestation 31 durch ein angedocktes Bodenbearbeitungsgerät besetzt ist, wenn die Ladestation aufgrund eines Fehlers nicht betriebsbereit ist oder vor einer nächsten Aufladung eines Akkus der Eingriff eines Benutzers erforderlich ist. Es kann auch zweckmäßig sein, das Zustandssignal dann und nur dann zu senden, wenn die Ladestation zum Aufladen eines Akkus bereit ist.

Alternativ oder zusätzlich zu dem Stationssender 30 kann vorgesehen sein, in der Grundplatte 32 eine Drahtschleife 46 (Fig. 3) zu verlegen, auf der ein Zustandssignal gesendet wird. Dieses Zustandssignal kann bevorzugt von den Empfangsspulen 6, 7 des Bodenbearbeitungsgeräts 1.1 erfasst und von der Steuereinheit 23 verarbeitet werden. Auf eine zusätzliche Empfangseinheit für ein Funksignal kann so verzichtet werden. Durch unterschiedliche Signalausgestaltung kann ein Zustandssignal auf der Drahtschleife 46 von einem Drahtsignal 41 auf dem Begrenzungsdraht 43 unterschieden werden.

Es kann vorteilhaft sein, zumindest eine Empfangsspule 6 oder 7 als Empfänger 40 für das Zustandssignal auszubilden. Dabei kann die als Empfänger 40 ausgebildete Empfangsspule 6 oder 7 vorteilhaft sowohl ein von dem Stationssender 30 ausgesendetes Zustandssignal empfangen und/oder ein über z. B. die Drahtschleife 46 ausgesendetes Zustandssignal.

Muss im Betrieb des Bodenbearbeitungssystems S ein Bodenbearbeitungsgerät geladen werden, z. B. das in Fig. 1 dargestellte Bodenbearbeitungsgerät 1.3, so fährt dieses vorteilhaft entlang der Randbegrenzung 2 bzw. entlang des Begrenzungsdrahtes 43, bis es auf eine erste Ladestation 31 trifft. Ist diese Ladestation 31 besetzt, wird z. B. der Empfänger 40 des Bodenbearbeitungsgerätes 1.3 das Zustandssignal "Besetzt" des Stationssenders 30 empfangen. Das von dem Empfänger 40 empfangene Zustandssignal wird der Auswerteeinheit 24 zugeführt, die ein entsprechendes Signal an die Steuereinheit 23 weitergibt. Die Steuereinheit 23 wird bei Empfang des Zustandssignals "Besetzt" den Antrieb 11 des Bodenbearbeitungsgerätes 1.3 derart steuern, dass dieses zweckmäßig auf dem in Fig. 1 strichliert dargestellten Fahrweg 42 die besetzte Ladestation 31 umfährt. Die Randbegrenzung 2 wird in Richtung auf den Arbeitsbereich A verlassen, die besetzte Ladestation 31 umfahren und zurück zur Randbegrenzung 2 gesteuert. Nach Wiedererreichen der Randbegrenzung 2 bzw. des Begrenzungsdrahtes 43 wird das Bodenbearbeitungsgerät 1.3 entlang dem Begrenzungsdraht 43 weiterfahren, bis es auf eine nächste - unbesetzte - Ladestation 31 trifft. Dort wird das Bodenbearbeitungsgerät 1.3 einfahren und dessen Akku 28 geladen.

Entlang der Randbegrenzung 2 bzw. des Begrenzungsdrahtes 43 können beliebig viele Ladestationen 31 angeordnet sein. Eine Ladestation 31 wird einfach auf der Randbegrenzung 2 bzw. auf dem Begrenzungsdraht 43 positioniert, wobei der Begrenzungsdraht 43 im Bereich der Ladestation 31 unterbrechungsfrei weitergeführt ist. Vorzugsweise verläuft der Begrenzungsdraht 43 in der Aufnahmerinne 38 der Grundplatte 32 der Ladestation 31. Dadurch kann eine vorgegebene Ausrichtung der Ladestation 31 relativ zum Begrenzungsdraht 43 sichergestellt werden. So ist es vorteilhaft, wenn der Begrenzungsdraht 43 unter einem rechten Winkel die Längsmittelachse 35 der Ladestation 31 kreuzt. Das insbesondere auf dem Begrenzungsdraht 43 anfahrende Bodenbearbeitungsgerät 1.3 nähert sich somit in zur Längsmittelachse 35 rechtwinkliger Fahrtrichtung. Dadurch kann ein vorgegebener Fahrweg 42 zum Umfahren einer besetzten Ladestation 31 präzise vorgegeben werden.

Wie Fig. 1 zeigt, sind auf dem Begrenzungsdraht 43 zwei Ladestationen 31 an frei gewählten Orten positioniert. Der Begrenzungsdraht 43 ist jeweils unterbrechungsfrei durch die Ladestation 31 durchgeschleift.

In besonderer Ausgestaltung der Erfindung ist die Basisstation 8 in gleicher Weise wie die Ladestation 31 ausgebildet, so wie in Fig. 1 gezeigt. Es kann vorgesehen sein, jede Ladestation 31 zugleich als Basisstation 8 auszubilden. Die Drahtschleife des Begrenzungsdrahtes 43 wird an eine Sendeeinheit 5 nur einer Basisstation 8 angeschlossen. Die weiteren Basisstationen 8 werden nur als Ladestation 31 genutzt. Eine in einer Ladestation 31 vorhandene Sendeeinheit 5 wird nicht genutzt bzw. deaktiviert.

Im Ausführungsbeispiel ist ein körperlicher Begrenzungsdraht 43 als Randbegrenzung 2 aufgeführt. Eine Randbegrenzung 2 kann im Rahmen der Erfindung auch eine virtuelle Randbegrenzung sein, die z.B. über Navigationsdaten wie Satellitennavigation oder Funkbaken eingerichtet ist. Auch besteht die Möglichkeit der Abspeicherung einer internen Karte im Bodenbearbeitungsgerät 1.1, 1.2, 1.3, 1.4, anhand welcher sich das Bodenbearbeitungsgerät 1.1, 1.2, 1.3, 1.4 orientiert und in der die Randbegrenzung 2 eingetragen ist. Eine weitere Möglichkeit der Randbegrenzung 2 ist - insbesondere bei Rasenmähern - eine optische Erkennung der Randbegrenzung. So kann ein autonom fahrender Rasenmäher mit einer Kamera versehen sein, die den Rand der Rasenfläche detektiert. Wird der Rand der Rasenfläche erkannt, steuert das Bodenbearbeitungsgerät auf die Rasenfläche zurück.

Insbesondere wenn der Arbeitsbereich A von mehreren Bodenbearbeitungsgeräten 1.1, 1.2, 1.3, 1.4 bearbeitet wird, erfolgt die Steuerung und Verwaltung der mehreren Bodenbearbeitungsgeräte 1.1, 1.2, 1.3, 1.4 zweckmäßig über eine zentrale Steuereinheit, die z. B. als Server ausgebildet sein kann. So kann ein Team aus einer beliebigen Anzahl von Bodenbearbeitungsgeräten 1.1, 1.2, 1.3, 1.4 über einen zentralen Server z. B. die Bearbeitungsdauer entsprechend dem Arbeitsfortschritt anpassen. Auch kann über eine Kommunikation zwischen den Bodenbearbeitungsgeräten 1.1, 1.2, 1.3, 1.4 und z. B. einem Server als zentrale Steuereinheit des Teams eine Anpassung der Betriebszeiten ebenso vorgenommen werden wie eine Änderung von in dem Bodenbearbeitungsgerät 1.1, 1.2, 1.3 gespeicherten Betriebsvariablen.

## Patentansprüche

1. Bodenbearbeitungssystem aus mindestens einem selbstfahrenden Bodenbearbeitungsgerät (1.1, 1.2, 1.3, 1.4), wobei ein Arbeitsbereich (A) des Bodenbearbeitungsgerätes (1.1, 1.2, 1.3, 1.4) durch eine Randbegrenzung (2) bestimmt ist, die durch einen Begrenzungsdraht (43) gebildet ist, und das Bodenbearbeitungsgerät (1.1, 1.2, 1.3, 1.4) ausgebildet ist, innerhalb des Arbeitsbereichs (A) selbstständig einen Fahrweg (W) zu fahren, wobei das Bodenbearbeitungsgerät (1.1, 1.2, 1.3, 1.4) einen Antrieb (11), eine Steuereinheit (23) und einen bordeigenen Akku (28) zur Energieversorgung des Bodenbearbeitungsgerätes (1.1, 1.2, 1.3, 1.4) aufweist, und mit mindestens einer Ladestation (31) zum Aufladen des Akkus (28) des Bodenbearbeitungsgerätes (1.1, 1.2, 1.3, 1.4), wobei das Bodenbearbeitungsgerät (1.1, 1.2, 1.3, 1.4) ausgebildet ist, die Ladestation (31) zum Aufladen des Akkus (28) anzufahren,
**dadurch gekennzeichnet, dass** eine Ladestation (31) ohne Unterbrechung des Begrenzungsdrahtes (43) der Randbegrenzung (2) auf den Begrenzungsdraht (43) aufgestellt ist, und der Begrenzungsdraht (43) im Bereich der Ladestation (31) unterbrechungsfrei weitergeführt ist.

2. Bodenbearbeitungssystem nach Anspruch 1,
**dadurch gekennzeichnet, dass** das Bodenbearbeitungsgerät (1.1, 1.2, 1.3, 1.4) ausgebildet ist, die Ladestation (31) entlang der Randbegrenzung (2) anzufahren.

3. Bodenbearbeitungssystem nach Anspruch 1,
**dadurch gekennzeichnet, dass** die Ladestation (31) einen Stationssender (30) umfasst, wobei der Stationssender (30) dazu ausgebildet ist, in Abhängigkeit von einem in der Ladestation (31) angedockten Bodenbearbeitungsgerät (1.1, 1.2, 1.3, 1.4) ein Zustandssignal zu senden.

4. Bodenbearbeitungssystem nach Anspruch 3,
**dadurch gekennzeichnet, dass** das Bodenbearbeitungsgerät (1.1, 1.2, 1.3, 1.4) dazu ausgebildet ist, das Zustandssignal von einem Empfänger (40) des Bodenbearbeitungsgerätes (1.1, 1.2, 1.3, 1.4) zu empfangen und im Bodenbearbeitungsgerät (1.1, 1.2, 1.3, 1.4) zu verarbeiten.

5. Bodenbearbeitungssystem nach Anspruch 1,
**dadurch gekennzeichnet, dass** mehrere autonom arbeitende Bodenbearbeitungsgeräte (1.1, 1.2, 1.3, 1.4) im Arbeitsbereich (A) angeordnet sind.

6. Bodenbearbeitungssystem nach Anspruch 1,
**dadurch gekennzeichnet, dass** eine Basisstation (8) vorgesehen ist, die elektrisch an den Begrenzungsdraht (43) angeschlossen und ausgebildet ist, auf dem Begrenzungsdraht (43) ein Drahtsignal (41) zu senden.

7. Bodenbearbeitungssystem nach Anspruch 6,
**dadurch gekennzeichnet, dass** die Basisstation (8) und die Ladestation (31) baugleich ausgebildet sind und der Begrenzungsdraht (43) ohne Unterbrechung durch die Ladestation (31) durchgeschleift ist.

8. Bodenbearbeitungssystem nach Anspruch 6,
**dadurch gekennzeichnet, dass** das Bodenbearbeitungsgerät (1.1, 1.2, 1.3, 1.4) eine Empfangsspule (6, 7) aufweist, in der ein auf dem Begrenzungsdraht (43) gesendetes Drahtsignal (41) ein Empfangssignal induziert, und die Steuereinheit (23) dazu ausgebildet ist, das Empfangssignal zu verarbeiten und zur Steuerung des Bodenbearbeitungsgerätes (1.1, 1.2, 1.3, 1.4) zu verwenden.

9. Bodenbearbeitungssystem nach Anspruch 8,
**dadurch gekennzeichnet, dass** zumindest eine Empfangsspule (6, 7) den Empfänger (40) für das Zustandssignal bildet.

10. Bodenbearbeitungssystem nach Anspruch 1,
**dadurch gekennzeichnet, dass** zur Übertragung eines Ladestroms die Ladestation (31) eine Kontaktnase (34) zur elektrischen Verbindung mit einer Kontaktbuchse (44) des Bodenbearbeitungsgerätes (1.1, 1.2, 1.3, 1.4) aufweist.

11. Bodenbearbeitungssystem nach Anspruch 1,
**dadurch gekennzeichnet, dass** die Ladestation (31) derart ausgebildet ist, den Akku (28) eines Bodenbearbeitungsgerätes (1.1, 1.2, 1.3, 1.4) in der Ladestation (31) kontaktlos zu laden.

12. Bodenbearbeitungssystem nach Anspruch 3,
**dadurch gekennzeichnet, dass** der Stationssender (30) eine Funkabstrahlcharakteristik (39) aufweist, die auf den durch die Randbegrenzung (2) begrenzten Arbeitsbereich (A) gerichtet ist.

13. Bodenbearbeitungssystem nach Anspruch 3,
**dadurch gekennzeichnet, dass** der Stationssender (30) dazu ausgebildet ist, eine Funkverbindung zum Bodenbearbeitungsgerät (1.1, 1.2, 1.3, 1.4) aufzubauen.

14. Bodenbearbeitungssystem nach Anspruch 3,
**dadurch gekennzeichnet, dass** der Stationssender (30) dazu ausgebildet ist, eine Infrarotverbindung zum Bodenbearbeitungsgerät (1.1, 1.2, 1.3, 1.4) aufzubauen.

15. Bodenbearbeitungssystem nach Anspruch 1,
**dadurch gekennzeichnet, dass** das Bodenbearbeitungsgerät (1.1, 1.2, 1.3, 1.4) ein selbstfahrender Rasenmäher (10) ist.

## Claims

1. Ground working system composed of at least one self-driving ground working device (1.1, 1.2, 1.3, 1.4), wherein an operating region (A) of the ground working device (1.1, 1.2, 1.3, 1.4) is determined by an edge boundary (2) formed by a boundary wire (43), and the ground working device (1.1, 1.2, 1.3, 1.4) is designed to travel a travelling path (W) independently within the operating region (A), wherein the ground working device (1.1, 1.2, 1.3, 1.4) has a drive (11), a control unit (23) and an on-board rechargeable battery (28) for supplying energy to the ground working device (1.1, 1.2, 1.3, 1.4), and having at least one charging station (31) for charging the rechargeable battery (28) of the ground working device (1.1, 1.2, 1.3, 1.4), wherein the ground working device (1.1, 1.2, 1.3, 1.4) is designed to start up the charging station (31) for charging the rechargeable battery (28),
**characterized in that** a charging station (31) is arranged on the boundary wire (43) without interrupting the boundary wire (43) of the edge boundary (2), and the boundary wire (43) is continued without interruption in the region of the charging station (31).

2. Ground working system according to Claim 1,
**characterized in that** the ground working device (1.1, 1.2, 1.3, 1.4) is designed to start up the charging station (31) along the edge boundary (2).

3. Ground working system according to Claim 1,
**characterized in that** the charging station (31) comprises a station transmitter (30), wherein the station transmitter (30) is designed to transmit a state signal depending on a ground working device (1.1, 1.2, 1.3, 1.4) docked in the charging station (31).

4. Ground working system according to Claim 3,
**characterized in that** the ground working device (1.1, 1.2, 1.3, 1.4) is designed to receive the state signal by way of a receiver (40) of the ground working device (1.1, 1.2, 1.3, 1.4) and to process said state signal in the ground working device (1.1, 1.2, 1.3, 1.4).

5. Ground working system according to Claim 1,
**characterized in that** a plurality of autonomously operating ground working devices (1.1, 1.2, 1.3, 1.4) are arranged in the operating region (A).

6. Ground working system according to Claim 1,
**characterized in that** a base station (8) is provided, which is electrically connected to the boundary wire (43) and is designed to transmit a wire signal (41) on the boundary wire (43).

7. Ground working system according to Claim 6,
**characterized in that** the base station (8) and the charging station (31) are of identical construction and the boundary wire (43) is looped through the charging station (31) without interruption.

8. Ground working system according to Claim 6,
**characterized in that** the ground working device (1.1, 1.2, 1.3, 1.4) has a reception coil (6, 7) in which a wire signal (41) transmitted on the boundary wire (43) induces a reception signal, and the control unit (23) is designed to process the reception signal and use said reception signal to control the ground working device (1.1, 1.2, 1.3, 1.4).

9. Ground working system according to Claim 8,
**characterized in that** at least one reception coil (6, 7) forms the receiver (40) for the state signal.

10. Ground working system according to Claim 1,
**characterized in that**, in order to transmit a charging current, the charging station (31) has a contact tab (34) for electrical connection to a contact socket (44) of the ground working device (1.1, 1.2, 1.3, 1.4).

11. Ground working system according to Claim 1,
**characterized in that** the charging station (31) is designed to charge the rechargeable battery (28) of a ground working device (1.1, 1.2, 1.3, 1.4) in the charging station (31) in a contactless manner.

12. Ground working system according to Claim 3,
**characterized in that** the station transmitter (30) has a radio emission characteristic (39) that is directed towards the operating region (A) that is bounded by the edge boundary (2).

13. Ground working system according to Claim 3,
**characterized in that** the station transmitter (30) is designed to establish a radio connection to the ground working device (1.1, 1.2, 1.3, 1.4).

14. Ground working system according to Claim 3,
**characterized in that** the station transmitter (30) is designed to establish an infrared connection to the ground working device (1.1, 1.2, 1.3, 1.4).

15. Ground working system according to Claim 1,
**characterized in that** the ground working device (1.1, 1.2, 1.3, 1.4) is a self-driving lawnmower (10).

## Revendications

1. Système de traitement du sol composé d'au moins un appareil de traitement du sol (1.1, 1.2, 1.3, 1.4) automoteur, une zone de travail (A) de l'appareil de traitement du sol (1.1, 1.2, 1.3, 1.4) étant déterminée par une délimitation de bord (2) qui est formée par un fil de délimitation (43),
et l'appareil de traitement du sol (1.1, 1.2, 1.3, 1.4) est configuré pour circuler de manière autonome sur un chemin (W) à l'intérieur de la zone de travail (A), l'appareil de traitement du sol (1.1, 1.2, 1.3, 1.4) possédant un mécanisme d'entraînement (11), une unité de commande (23) et un accumulateur (28) embarqué servant à l'alimentation en énergie de l'appareil de traitement du sol (1.1, 1.2, 1.3, 1.4), et comprenant au moins une station de charge (31) destinée à charger l'accumulateur (28) de l'appareil de traitement du sol (1.1, 1.2, 1.3, 1.4), l'appareil de traitement du sol (1.1, 1.2, 1.3, 1.4) étant configuré pour se diriger vers la station de charge (31) en vue de charger l'accumulateur (28) **caractérisé en ce qu'**une station de charge (31) et installée sur le fil de délimitation (43) sans interruption du fil de délimitation (43) de la délimitation de bord (2), et le fil de délimitation (43) se poursuit sans interruption dans la zone de la station de charge (31).

2. Système de traitement du sol selon la revendication 1, **caractérisé en ce que** l'appareil de traitement du sol (1.1, 1.2, 1.3, 1.4) est configuré pour se diriger vers la station de charge (31) le long de la délimitation de bord (2).

3. Système de traitement du sol selon la revendication 1, **caractérisé en ce que** la station de charge (31) comporte un émetteur de station (30), l'émetteur de station (30) étant configuré pour émettre un signal d'état en fonction d'un appareil de traitement du sol (1.1, 1.2, 1.3, 1.4) accueilli dans la station de charge (31).

4. Système de traitement du sol selon la revendication 3, **caractérisé en ce que** l'appareil de traitement du sol (1.1, 1.2, 1.3, 1.4) est configuré pour recevoir le signal d'état par un récepteur (40) de l'appareil de traitement du sol (1.1, 1.2, 1.3, 1.4) et le traiter dans l'appareil de traitement du sol (1.1, 1.2, 1.3, 1.4).

5. Système de traitement du sol selon la revendication 1, **caractérisé en ce que** plusieurs appareils de traitement du sol (1.1, 1.2, 1.3, 1.4) sont disposés dans la zone de travail (A).

6. Système de traitement du sol selon la revendication 1, **caractérisé en ce qu'**une station de base (8) est présente, laquelle est connectée électriquement au fil de délimitation (43) et configurée pour envoyer un signal de fil (41) sur le fil de délimitation (43).

7. Système de traitement du sol selon la revendication 6, **caractérisé en ce que** la station de base (8) et la station de charge (31) sont configurées de structure identique et le fil de délimitation (43) est bouclé sans interruption à travers la station de charge (31).

8. Système de traitement du sol selon la revendication 6, **caractérisé en ce que** l'appareil de traitement du sol (1.1, 1.2, 1.3, 1.4) possède une bobine de réception (6, 7), dans laquelle le signal de fil (41) envoyé sur le fil de délimitation (43) induit un signal de réception, et l'unité de commande (23) est configurée pour traiter le signal de réception et l'utiliser pour commander l'appareil de traitement du sol (1.1, 1.2, 1.3, 1.4).

9. Système de traitement du sol selon la revendication 8, **caractérisé en ce qu'**au moins une bobine de réception (6, 7) forme le récepteur (40) pour le signal d'état.

10. Système de traitement du sol selon la revendication 1, **caractérisé en ce que** pour la transmission du courant de charge, la station de charge (31) possède un tenon de contact (34) servant à la liaison électrique avec une douille de contact (44) de l'appareil de traitement du sol (1.1, 1.2, 1.3, 1.4).

11. Système de traitement du sol selon la revendication 1, **caractérisé en ce que** la station de charge (31) est configurée de manière à charger l'accumulateur (28) d'un appareil de traitement du sol (1.1, 1.2, 1.3, 1.4) dans la station de charge (31) sans contact.

12. Système de traitement du sol selon la revendication 3, **caractérisé en ce que** l'émetteur de station (30) possède une caractéristique de rayonnement radioélectrique (39) qui est dirigée sur la zone de travail (A) délimitée par la délimitation de bord (2).

13. Système de traitement du sol selon la revendication 3, **caractérisé en ce que** l'émetteur de station (30) est configuré pour établir une liaison radioélectrique avec l'appareil de traitement du sol (1.1, 1.2, 1.3, 1.4).

14. Système de traitement du sol selon la revendication 3, **caractérisé en ce que** l'émetteur de station (30) est configuré pour établir une liaison à infrarouges avec l'appareil de traitement du sol (1.1, 1.2, 1.3, 1.4).

15. Système de traitement du sol selon la revendication 1, **caractérisé en ce que** l'appareil de traitement du sol (1.1, 1.2, 1.3, 1.4) est une tondeuse à gazon (10) automotrice.
